# EUROPEAN PATENT APPLICATION

(11) **EP 4 485 923 A1**
(43) Date of publication of application: **01.01.2025**
(21) Application number: 23780064.4
(22) Date of filing: 23.03.2023
(51) Int. Cl.: H04N 19/117

(54) **IMAGE ENCODING DEVICE, IMAGE DECODING DEVICE, IMAGE ENCODING METHOD, AND IMAGE DECODING METHOD**

(30) Priority: 31.03.2022 US 202263325925 P
(71) Applicant: Panasonic Intellectual Property Corporation of America, Torrance, CA 90504 (US)
(72) Inventor: GAO, Jingying, Singapore 469332 (SG); TEO, Han Boon, Singapore 469332 (SG); LIM, Chong Soon, Singapore 469332 (SG); YADAV, Praveen Kumar, Singapore 469332 (SG); ABE, Kiyofumi, Kadoma-shi, Osaka 571-0057 (JP); NISHI, Takahiro, Kadoma-shi, Osaka 571-0057 (JP); TOMA, Tadamasa, Kadoma-shi, Osaka 571-0057 (JP)
(74) Representative: Grünecker Patent- und Rechtsanwälte PartG mbB
(86) International application number: PCT/JP2023/011563
(87) International publication number: WO 2023/190053

(57) **Abstract**

An image encoding device includes: a filter processing unit that performs filter processing on an input image to generate a first image; and an encoding processing unit that generates a bit stream by performing encoding processing on the first image and transmits the bit stream to an image decoding device, in which the filter processing unit: includes a plurality of filters of different types; and selects one filter from the plurality of filters based on usage information indicating image usage on the image decoding device side and applies the selected filter to the input image.

## Description

### Technical Field

The present disclosure relates to an image encoding device, an image decoding device, an image encoding method, and an image decoding method.

### Background Art

Patent Literature 1 discloses a video encoding and decoding method using adaptive coupling pre-filters and post-filters.

Patent Literature 2 discloses an encoding method of image data for loading into an artificial intelligence (AI) integrated circuit.

### Citation List

### Patent Literature

Patent Literature 1: US Patent Publication No. 9883207
Patent Literature 2: US Patent Publication No. 10452955

### Summary of Invention

An object of the present disclosure is to improve bit efficiency of a bit stream transmitted from an image encoding device to an image decoding device.

An image encoding device according to one aspect of the present disclosure includes: a filter processing unit that performs filter processing on an input image to generate a first image; and an encoding processing unit that generates a bit stream by performing encoding processing on the first image and transmits the bit stream to an image decoding device, in which the filter processing unit: includes a plurality of filters of different types; and selects one filter from the plurality of filters based on usage information indicating image usage on the image decoding device side and applies the selected filter to the input image.

### Brief Description of Drawings

FIG. 1 is a diagram showing a simplified configuration of an image processing system according to an embodiment of the present disclosure.
FIG. 2 is a diagram showing a simplified configuration of a task processing unit.
FIG. 3 is a diagram showing object detection and object segmentation as one example of a machine task.
FIG. 4 is a diagram showing object tracking, action recognition, and pose estimation as one example of the machine task.
FIG. 5 is a diagram showing a simplified configuration of a filter processing unit.
FIG. 6A is a diagram showing an example of a plurality of filters of different types.
FIG. 6B is a diagram showing an example of the plurality of filters of different types.
FIG. 6C is a diagram showing an example of the plurality of filters of different types.
FIG. 6D is a diagram showing an example of the plurality of filters of different types.
FIG. 6E is a diagram showing an example of the plurality of filters of different types.
FIG. 6F is a diagram showing an example of the plurality of filters of different types.
FIG. 6G is a diagram showing an example of the plurality of filters of different types.
FIG. 6H is a diagram showing an example of the plurality of filters of different types.
FIG. 6I is a diagram showing an example of the plurality of filters of different types.
FIG. 7 is a diagram showing an example of a lookup table that defines the selection of filters based on usage information.
FIG. 8 is a diagram showing a first configuration example of the filter.
FIG. 9 is a diagram showing a second configuration example of the filter.
FIG. 10 is a diagram showing a third configuration example of the filter.
FIG. 11 is a diagram showing a fourth configuration example of the filter.
FIG. 12 is a diagram showing a first example of data structure of a bit stream.
FIG. 13 is a diagram showing a second example of the data structure of the bit stream.
FIG. 14 is a diagram showing a first example of SEI message syntax about filter information.
FIG. 15 is a diagram showing a second example of the SEI message syntax about the filter information.
FIG. 16 is a diagram for describing an example in which a setting unit sets a threshold for IOU.
FIG. 17 is a flowchart showing the process flow executed by an image encoding device.
FIG. 18 is a flowchart showing the process flow executed by an image decoding device.

### Description of Embodiments

### (Knowledge Underlying Present Disclosure)

The conventional encoding method has aimed to provide optimal video for human vision under bit rate constraints.

With the advancement of machine learning or neural network-based applications along with abundant sensors, many intelligent platforms that handle large amounts of data, including connected cars, video surveillance, smart cities, or the like have been implemented. Due to the constant generation of large amounts of data, the conventional method involving humans in pipelines has become inefficient and unrealistic in terms of latency and scale.

Furthermore, in transmission and archive systems, there is a concern that more compact data representation and low-latency solutions are required, and therefore, video coding for machines (VCM) has been introduced.

In some cases, machines can communicate with each other and perform tasks without human intervention, while in other cases, additional processing by humans may be necessary for decompressed specific streams. For example, in surveillance cameras, when a human "supervisor" searches for a specific person or scene in a video, or the like.

In other cases, corresponding bit streams are used by both humans and machines. For connected cars, features can be used for image correction functions for humans and for the object detection and segmentation for machines.

Typical system architecture includes a pair of image encoding device and image decoding device. The input of the system is a video, a still image, or a feature quantity. Examples of a machine task include object detection, object segmentation, object tracking, action recognition, pose estimation, or an arbitrary combination thereof. There is a possibility that human vision is one of the use cases that can be used along with the machine task.

According to the conventional technology, there is a problem that the transmission code amount increases and the bit efficiency becomes poor because the highest quality bit stream always assumed for human vision is transmitted from the image encoding device to the image decoding device.

To solve such a problem, the present inventors have conceived the present disclosure based on the finding that by performing appropriate filter processing on an input image on the image encoding device side based on usage information indicating the image usage on the image decoding device side, it is possible to improve the bit efficiency in the transmission of the bit stream from the image encoding device to the image decoding device.

Next, each aspect of the present disclosure will be described.

An image encoding device according to a first aspect of the present disclosure includes: a filter processing unit that performs filter processing on an input image to generate a first image; and an encoding processing unit that generates a bit stream by performing encoding processing on the first image and transmits the bit stream to an image decoding device, in which the filter processing unit: includes a plurality of filters of different types; and selects one filter from the plurality of filters based on usage information indicating image usage on the image decoding device side and applies the selected filter to the input image.

According to the first aspect, the filter processing unit includes the plurality of filters of different types, and selects one filter from the plurality of filters based on the usage information indicating the image usage on the image decoding device side and applies the selected filter to the input image. As a result, it is possible to improve the bit efficiency in the transmission of the bit stream from the image encoding device to the image decoding device.

In the image encoding device according to a second aspect of the present disclosure, preferably, the plurality of filters includes at least one of a noise removal filter, a sharpening filter, a bit depth conversion filter, a color space conversion filter, a resolution conversion filter, and a filter using a neural network in the first aspect.

According to the second aspect, the filter processing unit can apply an appropriate filter to the input image according to the image usage on the image decoding device side.

In the image encoding device according to a third aspect of the present disclosure, preferably, the noise removal filter includes at least one of a low-pass filter, a Gaussian filter, a smoothing filter, an averaging filter, a bilateral filter, and a median filter in the second aspect.

According to the third aspect, by applying at least one of the low-pass filter, Gaussian filter, smoothing filter, averaging filter, bilateral filter, and median filter to the input image, it is possible to remove noise in the input image.

In the image encoding device according to a fourth aspect of the present disclosure, preferably, the resolution conversion filter includes a downsampling filter that reduces resolution of the first image from resolution of the input image in the second aspect.

According to the fourth aspect, it is possible to reduce the code amount by applying the downsampling filter to the input image.

In the image encoding device according to a fifth aspect of the present disclosure, preferably, the image usage includes at least one machine task and human vision in any one of the first to fourth aspects.

According to the fifth aspect, it is possible to make a selection to apply a filter that reduces the code amount when the image usage is the machine task, and to apply a filter that does not reduce the code amount as much as when the image usage is the machine task, when the image usage is the human vision.

In the image encoding device according to a sixth aspect of the present disclosure, preferably, when the image usage is the machine task, the filter processing unit reduces a code amount of the first image from a code amount of the input image by the filter processing in the fifth aspect.

According to the sixth aspect, it is possible to improve the bit efficiency in the transmission of the bit stream from the image encoding device to the image decoding device by applying the filter that reduces the code amount when the image usage is the machine task.

In the image encoding device according to a seventh aspect of the present disclosure, preferably, the filter processing unit: defines a non-important region that is not important for the machine task in the input image; and reduces the code amount of the first image from the code amount of the input image by deleting information on details of the non-important region in the sixth aspect.

According to the seventh aspect, by reducing the code amount of the first image through deletion of the information on details of the non-important region, there is no need to reduce the code amount of the important region, which is important for the machine task, making it possible to execute the machine task appropriately on the image decoding device side.

In the image encoding device according to an eighth aspect of the present disclosure, preferably, the filter processing unit: defines an important region that is important for the machine task in the input image; and emphasizes the important region by the filter processing in the sixth or seventh aspect.

According to the eighth aspect, the filter processing unit emphasizes the important region by the filter processing, making it possible to execute the machine task appropriately on the image decoding device side.

In the image encoding device according to a ninth aspect of the present disclosure, preferably, when the image usage is the human vision, the filter processing unit does not reduce the code amount of the first image by the filter processing more than when the image usage is the machine task in the fifth aspect.

According to the ninth aspect, when the image usage is the human vision, it is possible to execute the human vision appropriately on the image decoding device side by applying a filter that does not reduce the code amount as much as when the image usage is the machine task.

In the image encoding device according to a tenth aspect of the present disclosure, preferably, the encoding processing unit stores filter information about the filter applied by the filter processing unit to the input image in the bit stream in any one of the first to ninth aspect.

According to the tenth aspect, by storing the filter information about the filter applied to the input image in the bit stream, it is possible to utilize the filter information in the machine task on the image decoding device side.

In the image encoding device according to an eleventh aspect of the present disclosure, preferably, the encoding processing unit stores the filter information in a header of the bit stream in the tenth aspect.

According to the eleventh aspect, by storing the filter information in the header of the bit stream, the image decoding device can easily extract the filter information from the bit stream.

In the image encoding device according to a twelfth aspect of the present disclosure, preferably, the header includes an SEI region, and the encoding processing unit stores the filter information in the SEI region in the eleventh aspect.

According to the twelfth aspect, by storing the filter information in the SEI region, it is possible to easily handle the filter information as additional information.

An image decoding device according to a thirteenth aspect of the present disclosure includes: a decoding processing unit that receives a bit stream including an encoded image from an image encoding device and generates a decoded image by decoding the bit stream; a task processing unit that executes a machine task based on the decoded image; and a setting unit that extracts filter information from the bit stream and sets a parameter value used when the task processing unit executes the machine task based on the filter information, in which the bit stream further includes the filter information about a filter applied to an input image by the image encoding device according to the machine task.

According to the thirteenth aspect, the setting unit extracts the filter information from the bit stream, and sets the parameter value used when the task processing unit executes the machine task based on the filter information. As a result, the task processing unit can execute appropriate task processing according to the filter applied by the image encoding device to the input image.

An image encoding method according to a fourteenth aspect of the present disclosure includes, by an image encoding device: performing filter processing on an input image to generate a first image; generating a bit stream by performing encoding processing on the first image and transmitting the bit stream to an image decoding device; and selecting one filter from a plurality of filters of different types based on usage information indicating image usage on the image decoding device side and applying the selected filter to the input image in the filter processing.

According to the fourteenth aspect, in the filter processing, based on the usage information indicating the image usage on the image decoding device side, one filter is selected from the plurality of filters of different types and applied to the input image. As a result, it is possible to improve the bit efficiency in the transmission of the bit stream from the image encoding device to the image decoding device.

An image decoding method according to a fifteenth aspect of the present disclosure includes, by an image decoding device: receiving a bit stream including an encoded image from an image encoding device and generating a decoded image by decoding the bit stream; executing a machine task based on the decoded image; and extracting filter information from the bit stream and setting a parameter value used when executing the machine task based on the filter information, in which the bit stream further includes the filter information about a filter applied to an input image by the image encoding device according to the machine task.

According to the twelfth aspect, the filter information is extracted from the bit stream, and the parameter value used when executing the machine task is set based on the filter information. As a result, it is possible to execute appropriate task processing according to the filter applied by the image encoding device to the input image.

### (Embodiments of Present Disclosure)

Embodiments of the present disclosure will be described in detail below with reference to the drawings. Note that elements denoted with the same reference sign in different drawings represent the same or corresponding element.

Note that each embodiment described below shows one specific example of the present disclosure. Numerical values, shapes, components, steps, order of steps, and the like shown in the following embodiment are merely one example and are not intended to limit the present disclosure. A component that is not described in an independent claim representing the highest concept among components in the embodiment below is described as an arbitrary component. In all the embodiments, respective items of content can be combined.

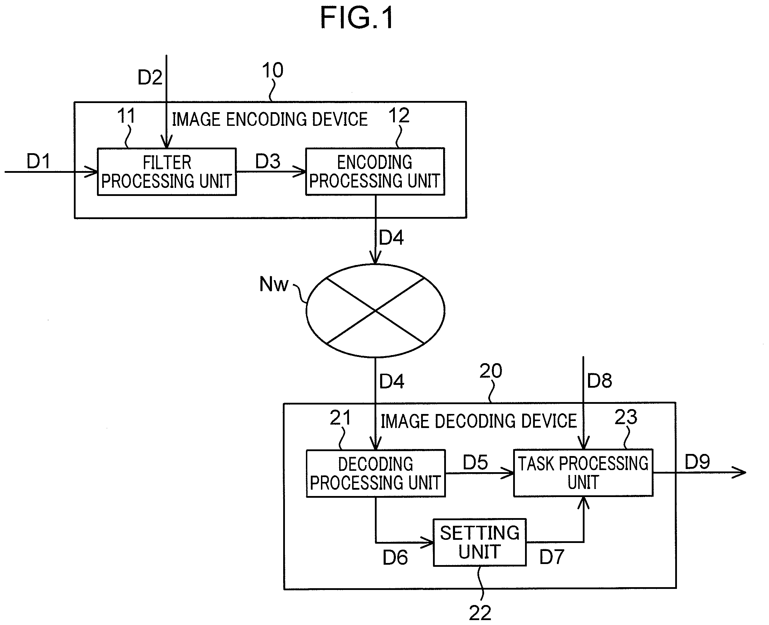

FIG. 1 is a diagram showing a simplified configuration of an image processing system according to the embodiment of the present disclosure. The image processing system includes an image encoding device 10, a network Nw, and an image decoding device 20.

The image encoding device 10 includes a filter processing unit 11 and an encoding processing unit 12. Image data D1 of an input image and usage information D2 indicating image usage on the image decoding device 20 side are input to the filter processing unit 11. The input image includes a video, still image, or feature quantity. The filter processing unit 11 includes a plurality of filters of different types. The filter processing unit 11 selects one filter from the plurality of filters based on the usage information D2 and applies the selected filter to the input image. The filter processing unit 11 performs filter processing using the selected filter on the input image to generate a first image and outputs image data D3 of the first image. The encoding processing unit 12 performs encoding processing on the first image to generate a bit stream D4 about the encoded image, and transmits the bit stream D4 to the image decoding device 20 via the network Nw.

The network Nw is the Internet, a wide area network (WAN), a local area network (LAN), or an arbitrary combination thereof. The network Nw may not necessarily be limited to a bidirectional communication network, but may be a unidirectional communication network that transmits broadcast waves such as terrestrial digital broadcasting or satellite broadcasting. The network Nw may be a recording medium such as a digital versatile disc (DVD) or a blue-ray disc (BD) on which the bit stream D4 is recorded.

The image decoding device 20 includes a decoding processing unit 21, a setting unit 22, and a task processing unit 23. The decoding processing unit 21 receives the bit stream D4 from the image encoding device 10 via the network Nw, generates a decoded image by decoding the bit stream D4, and outputs image data D5 of the decoded image. The task processing unit 23 uses the decoded image to execute the machine task according to usage information D8 indicating the image usage. The bit stream D4 includes filter information D6, which represents the filter the image encoding device 10 applies to the input image according to the machine task. The setting unit 22 extracts the filter information D6 from the bit stream D4, sets a parameter value used when the task processing unit 23 executes the machine task based on the filter information D6, and outputs setting information D7. The parameter value includes a threshold for a confidence score for machine task analysis or a threshold for the intersection over union (IOU). The task processing unit 23 executes the machine task by using the parameter value indicated in the setting information D7 and outputs result data D9 such as inference results. Note that the configuration of the image decoding device 20 shown in FIG. 1 is one example and is not limited to this example. For example, the setting unit 22 may be omitted, and the functions of the setting unit 22 may be mounted in the decoding processing unit 21 or the task processing unit 23.

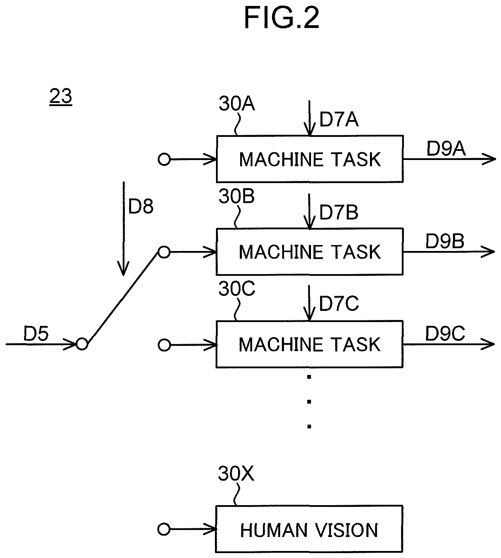

FIG. 2 is a diagram showing a simplified configuration of the task processing unit 23. The image usage on the image decoding device 20 side includes at least one machine task and human vision. In the example of FIG. 2, the image usage includes a plurality of machine tasks 30A to 30C and human vision 30X. When the usage information D8 selects, for example, the machine task 30B, the setting unit 22 outputs setting information D7B of the parameter value used when the task processing unit 23 executes the machine task 30B. The task processing unit 23 executes the machine task 30B by using the parameter value indicated in the setting information D7B based on the image data D5 and outputs result data D9B such as inference results.

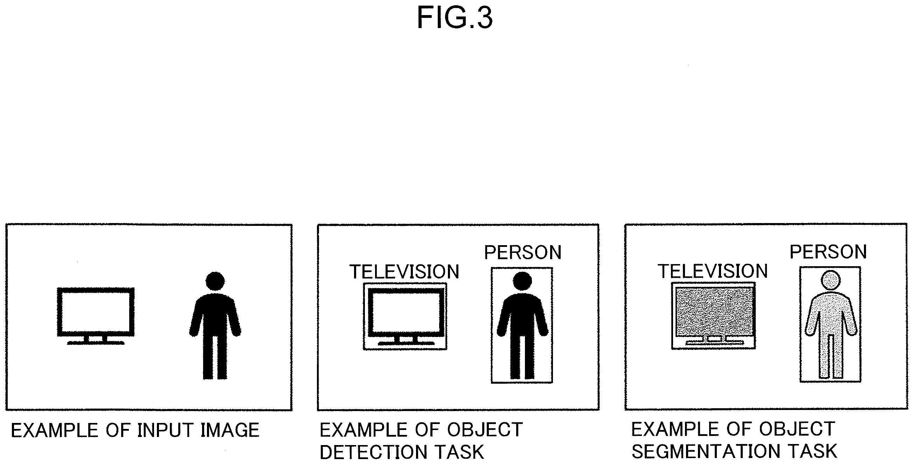

FIG. 3 is a diagram showing object detection and object segmentation as one example of the machine task. In object detection, the attribute of the object (television and person in this example) included in the input image is detected. In addition to the attribute of the object included in the input image, the position and the number of objects in the input image may be detected. By the object detection, for example, the position of the object to be recognized may be narrowed down, or objects other than the object to be recognized may be excluded. As a specific use, for example, detection of a face in a camera and detection of a pedestrian or the like in autonomous driving can be considered. In object segmentation, pixels in the region corresponding to the object are segmented (or partitioned). By the object segmentation, for example, usage such as separating obstacles and roads in autonomous driving to provide assistance to safe traveling of a car, detecting product defects in a factory, and identifying terrain in a satellite image can be considered.

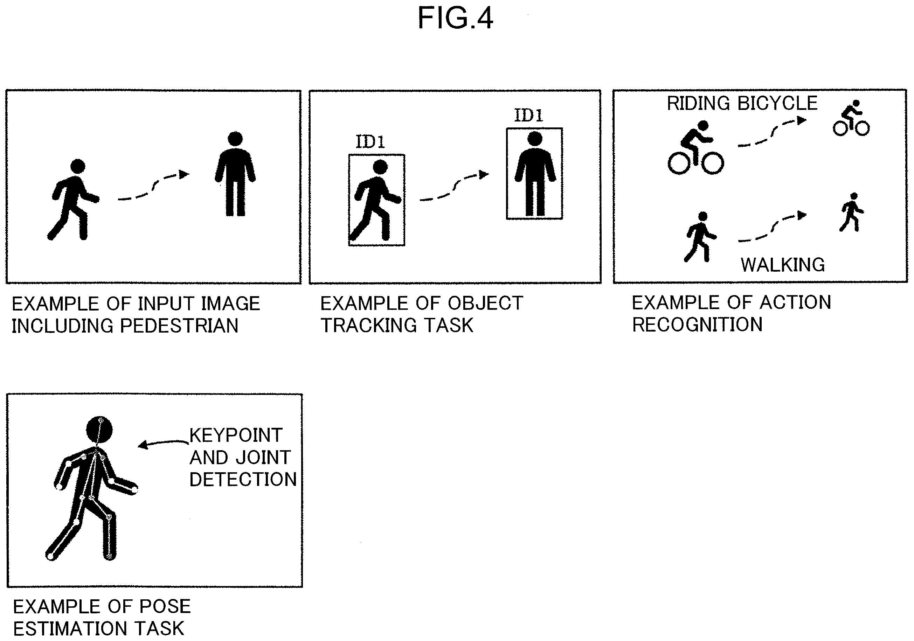

FIG. 4 is a diagram showing object tracking, action recognition, and pose estimation as one example of the machine task. In object tracking, the movement of an object assigned with an identification number ID is tracked. As a usage, for example, counting the number of users in a shop or other facilities and analyzing motion of an athlete can be considered. Faster processing will enable real-time object tracking and application to camera processing such as autofocus. In action recognition, the type of action of the object (in this example, "riding a bicycle" and "walking") is detected. For example, by the use for a security camera, application to prevention and detection of criminal behavior such as robbery and shoplifting, and to prevention of forgetting work in a factory is possible. In pose estimation, the posture of the object is detected by keypoint and joint detection. For example, usage in an industrial field such as improving work efficiency in a factory, a security field such as detection of abnormal behavior, and healthcare and sports fields can be considered.

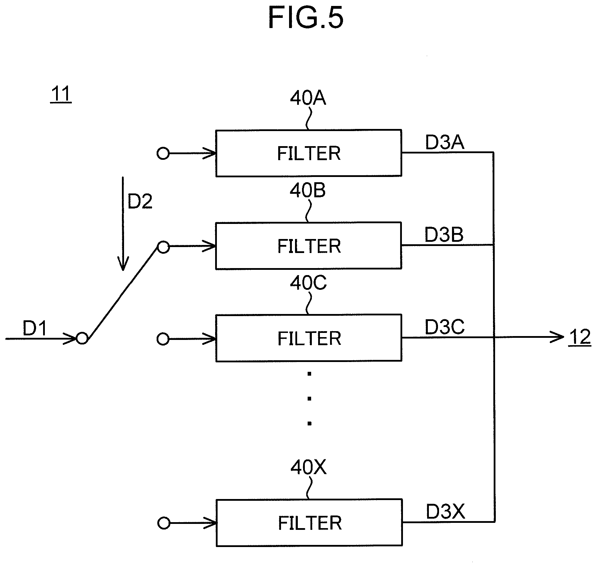

FIG. 5 is a diagram showing a simplified configuration of the filter processing unit 11. The filter processing unit 11 includes a plurality of filters 40 of different types that can be selected according to the image usage on the image decoding device 20 side. The type includes at least one of the filter's shape, size, and coefficient value. In the example of FIG. 5, the filter processing unit 11 includes filters 40A to 40C corresponding to the machine tasks 30A to 30C and a filter 40X corresponding to the human vision 30X. When the usage information D8 selects, for example, the machine task 30B, the usage information D2 selects the filter 40B corresponding to the machine task 30B. In this case, the filter processing unit 11 performs filter processing using the filter 40B on the input image to generate the first image and outputs image data D3B of the first image.

The filters 40A to 40C corresponding to the machine tasks are filters that reduce the code amount of the first image from the code amount of the input image by the filter processing. As will be described later, the filters 40A to 40C may be filters that emphasize the important region indicating important features for the machine task while reducing the code amount of the non-important region, which is not important for the machine tasks. The filters 40A to 40C corresponding to the machine tasks include at least one of a noise removal filter, a sharpening filter, a bit depth conversion filter, a color space conversion filter, a resolution conversion filter, and a filter using a neural network. The noise removal filter includes at least one of a low-pass filter, a Gaussian filter, a smoothing filter, an averaging filter, a bilateral filter, and a median filter to remove noise by reducing information on details of the input image. The sharpening filter includes an edge detection filter or an edge enhancement filter, specifically includes a Laplacian filter, a Gaussian-Laplacian filter, a Sobel filter, a Prewitt filter, or a Canny edge detection filter. The bit depth conversion filter converts bit depth of luminance signals and/or color signals between the input image and the first image. For example, by truncating lower bits of the color signal of the first image and converting the bit depth of the first image to be smaller than the bit depth of the input image, the code amount is reduced. The color space conversion filter converts the color space between the input image and the first image. For example, by converting the color space of YUV444 in the input image to YUV422, YUV420, or YUV400 in the first image, the code amount is reduced. The resolution conversion filter converts the image resolution between the input image and the first image. The resolution conversion filter includes a downsampling filter that reduces the resolution of the first image from the resolution of the input image. The resolution conversion filter may include an upsampling filter that increases the resolution of the first image from the resolution of the input image. Note that the filters 40A to 40C corresponding to the machine tasks may include, for example, a deblocking filter, an ALF filter, a CCALF filter, an SAO filter, an LMCS filter, or an arbitrary combination thereof, as defined in H.266/versatile video codec (VVC).

The filter 40X corresponding to the human vision is a filter that does not reduce the code amount of the first image from the code amount of the input image by filter processing. The filter 40X corresponding to the human vision includes a bypass filter that outputs the input image as it is as the first image. The filter 40X may be a filter that reduces the code amount of the first image from the code amount of the input image by filter processing, but the reduction effect of the code amount is suppressed more than the filters 40A to 40C. The filter 40X may be a filter that emphasizes the important region of the input image, but the emphasis effect is suppressed more than the filters 40A to 40C.

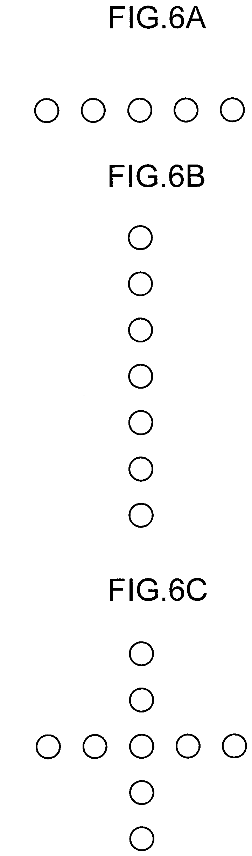

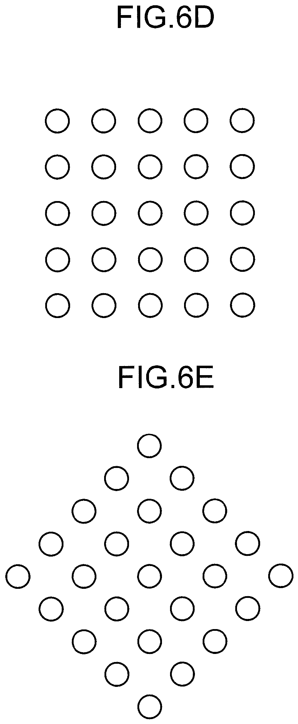

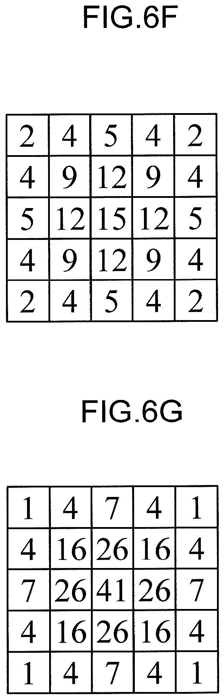

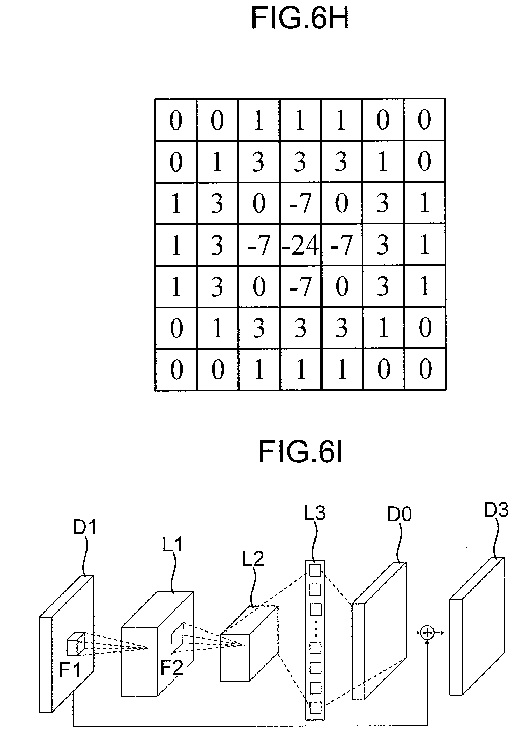

FIGS. 6A to 6I are diagrams showing examples of a plurality of filters 40 of different types. FIG. 6A shows a one-dimensional horizontal filter with N = 5. N is the size of the filter corresponding to the number of filter coefficient values. FIG. 6B shows a one-dimensional vertical filter with N = 7. FIG. 6C shows a two-dimensional cross-shaped filter with N = 9. FIG. 6D shows a two-dimensional square filter with N = 25. FIG. 6E shows a two-dimensional diamond-shaped filter with N = 25. FIGS. 6F and 6G show noise removal filters using a 5x5 Gaussian filter, with the filter in FIG. 6F having a relatively strong filter strength and the filter in FIG. 6G having a relatively weak filter strength. FIG. 6H shows an edge detection filter using a 7×7 Gaussian-Laplacian filter. In this way, the plurality of filters 40 of different types may have different filter shapes, different filter sizes, and different filter coefficient values. FIG. 6I shows a filter using a neural network. The neural network has a convolution layer L1, a pooling layer L2, and a fully connected layer L3. The image data of the convolution layer L1 is generated by applying the convolution filter F1 to the image data D1 of the input image, and the image data of the pooling layer L2 is generated by applying the pooling filter F2 to the image data of the convolution layer L1. Image data D0 of the predicted residual is output from the fully connected layer L3, and the image data D1 and the image data D0 are added to output the image data D3 of the first image.

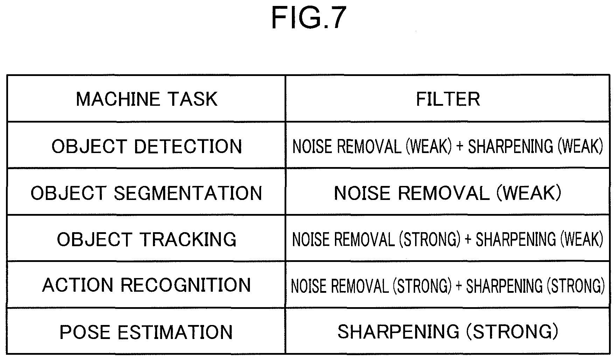

FIG. 7 is a diagram showing an example of a lookup table that defines the filter selection based on the usage information D2. The lookup table is held by the filter processing unit 11. When the image usage indicated by the usage information D2 is the machine task of object detection, the filter processing unit 11 selects the weak noise removal filter and the weak sharpening filter because detailed information about the object is important. When the image usage indicated by the usage information D2 is the machine task of object segmentation, the filter processing unit 11 selects the weak noise removal filter because details of the image is important in the object segmentation model (Mask R-CNN) that performs prediction at the pixel level. When the image usage indicated by the usage information D2 is the machine task of object tracking, the filter processing unit 11 selects the strong noise removal filter and the weak sharpening filter because detailed information about the object is not important. When the image usage indicated by the usage information D2 is the machine task of action recognition, the filter processing unit 11 selects the strong noise removal filter and the strong sharpening filter to emphasize dynamic content such as an object edge while removing redundant information on static content such as background. When the image usage indicated by the usage information D2 is the machine task of pose estimation, the filter processing unit 11 selects the strong sharpening filter to emphasize details of the image because the pose estimation model (HRNet) learns high-resolution images to detect human keypoints such as ears or eyes.

As one example, the filter processing unit 11 selects the strong noise removal filter for the machine task of object tracking and selects the weak noise removal filter for the machine task of object detection. The object detection is a process of detecting a target object in an image, and object tracking is a process of tracking a trajectory of an object in consecutive frames of a video. In this case, in object tracking, the object's edge and shape are essential, while in object detection, detailed information about the object is essential. Therefore, in object tracking, the strong noise removal filter is applied to remove detailed information, while in object detection, the weak noise removal filter is applied to remove only unnecessary information.

In another example, the filter processing unit 11 selects the large size noise removal filter for the machine task of object tracking and selects the small size noise removal filter for the machine task of object detection. The small size noise removal filter removes noise over a wide range of frequency component because of low control performance for frequency component, and the large size noise removal filter can remove noise of a specific range of frequency component because of high control performance for frequency component. In some cases, the small size filter has a less reduction effect on the code amount than the large size filter, while in other cases, the small size filter has a greater reduction effect on the code amount than the large size filter.

In another example, the filter processing unit 11 selects a filter with a wide output color range and large bit depth for the machine task of object tracking, and selects a filter with a narrow output color range and small bit depth for the machine task of object detection. By applying the filter with a small bit depth, it is possible to enhance the reduction effect of code amount.

In another example, the filter processing unit 11 selects different color space filters between the machine task of object tracking and the machine task of object detection.

In another example, the filter processing unit 11 selects a downsampling filter with a small scale factor and high output resolution for the machine task of object tracking, and selects a downsampling filter with a large scale factor and low output resolution for the machine task of object detection.

Each filter 40 shown in FIG. 5 may include one filter or a plurality of filters, or may include at least one filter and at least one image processing unit.

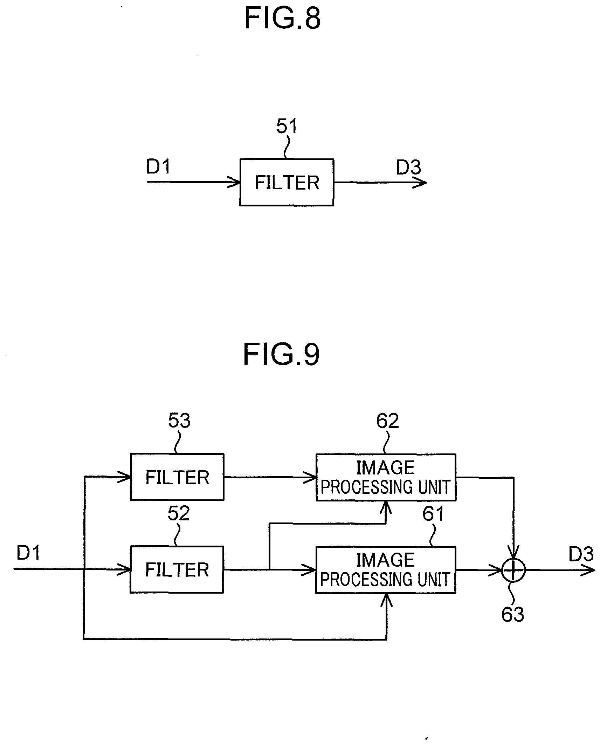

FIG. 8 is a diagram showing a first configuration example of the filter 40. The filter 40 includes one filter 51. The filter 51 is, for example, a Gaussian filter. The filter 51 applies the Gaussian filter to the image data D1 to output the noise-removed image data D3.

FIG. 9 is a diagram showing a second configuration example of the filter 40. The filter 40 includes two filters 52 and 53, two image processing units 61 and 62, and an addition processing unit 63. The filter 52 is, for example, a Gaussian-Laplacian filter, the filter 53 is, for example, a Gaussian filter, the image processing unit 61 is, for example, an edge extraction processing unit, and the image processing unit 62 is, for example, a background extraction processing unit. The filter 52 applies the Gaussian-Laplacian filter to the image data D1 of the input image to output an edge map showing the position of edge in the image. The filter 53 applies the Gaussian filter to the image data D1 of the input image to output noise-removed image data. The image processing unit 61 outputs an edge image by extracting the edge from the input image based on the image data D1 and the edge map. The image processing unit 62 outputs the background image by extracting the background from the input image based on the noise-removed image data and the edge map. The addition processing unit 63 outputs the image data D3 of the first image by adding the edge image and the background image. In the example of FIG. 9, the filter processing unit 11 reduces the code amount of the first image from the code amount of the input image by defining the background region in the input image as the non-important region that is not important for the machine task, and deleting information on details of the background region (that is, high frequency range) by the filter 53.

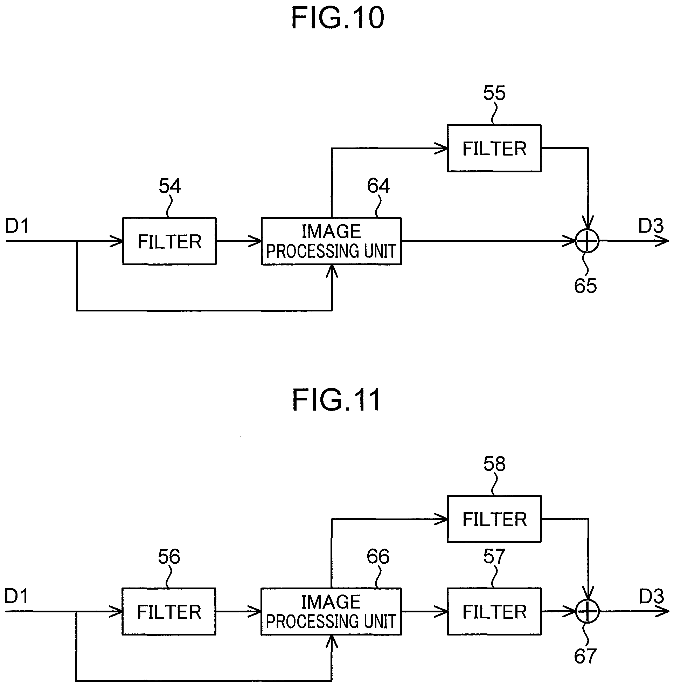

FIG. 10 is a diagram showing a third configuration example of the filter 40. The filter 40 includes two filters 54 and 55, one image processing unit 64, and an addition processing unit 65. The filter 54 is, for example, a face detection filter using a neural network, the filter 55 is, for example, an averaging filter, and the image processing unit 64 is, for example, a region division processing unit. The filter 54 detects the face of a person included in the image data D1 of the input image, and outputs a bounding box of the face that defines the position coordinates of the face. The image processing unit 64 separates the input image into a non-face region and a face region based on the image data D1 and the face bounding box. The filter 55 outputs a blurred face image by performing averaging on the face region. The addition processing unit 65 outputs the image data D3 of the first image by adding the image of the region other than the face and the blurred face image. For example, since details of the face are not important for the machine task of object tracking, by blurring the face, the code amount can be reduced and the privacy can be protected. In the example of FIG. 10, the filter processing unit 11 reduces the code amount of the first image from the code amount of the input image by defining the face region in the input image as the non-important region that is not important for the machine task, and deleting information on details of the face region (that is, high frequency range) by the filter 55.

FIG. 11 is a diagram showing a fourth configuration example of the filter 40. The filter 40 includes three filters 56 to 58, one image processing unit 66, and an addition processing unit 67. The filter 56 is, for example, a foreground detection filter using a neural network, the filter 57 is, for example, a sharpening filter, the filter 58 is, for example, a noise removal filter, and the image processing unit 66 is, for example, a region division processing unit. The filter 56 detects the foreground corresponding to an important subject included in the image data D1 of the input image, and outputs a bounding box of the foreground that defines the position coordinates of the foreground. The image processing unit 66 separates the input image into a foreground region and other background regions based on the image data D1 and the foreground bounding box. The filter 57 outputs the foreground image that has been sharpened by edge enhancement and the like by performing sharpening on the foreground region. The filter 58 outputs the noise-removed background image by performing noise removal processing on the background region. The addition processing unit 67 outputs the image data D3 of the first image by adding the sharpened foreground image and the noise-removed background image. In the example of FIG. 11, the filter processing unit 11 reduces the code amount of the first image from the code amount of the input image by defining the background region in the input image as the non-important region that is not important for the machine task, and deleting information on details of the background region (that is, high frequency range) by the filter 58. Additionally, in the example of FIG. 11, the filter processing unit 11 defines the foreground region as an important region that shows important features for the machine task in the input image, and emphasizes the foreground region by the filter 57 to improve the accuracy of the machine task such as action recognition or pose estimation.

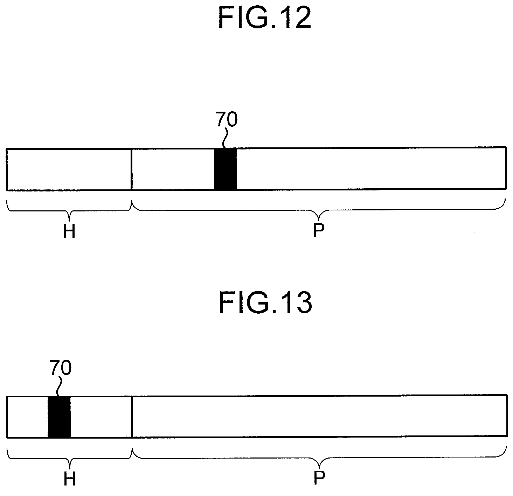

FIG. 12 is a diagram showing a first example of the data structure of the bit stream D4. The bit stream D4 includes a header H in which management information or the like is stored and a payload P in which image data is stored. The encoding processing unit 12 stores the encoded data 70 of the filter information D6 indicating the filter applied by the image encoding device 10 to the input image according to the machine task at a predetermined location of the payload P.

FIG. 13 is a diagram showing a second example of the data structure of the bit stream D4. As in FIG. 12, the bit stream D4 includes the header H and the payload P. The encoding processing unit 12 stores the encoded data 70 of the filter information D6 at a predetermined location of the header H. The predetermined location is, for example, the supplemental enhancement information (SEI) region for storing additional information. The predetermined location may be VPS, SPS, PPS, PH, SH, APS, a tile header, or the like.

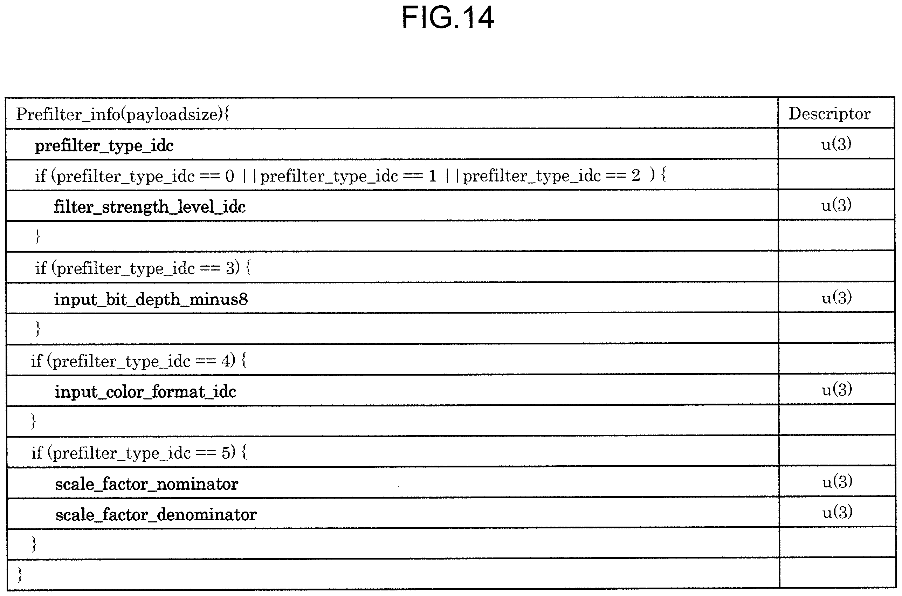

FIG. 14 is a diagram showing a first example of SEI message syntax about the filter information D6.

prefilter_type_idc designates, for example, the type of filter by using three-bit flag information. For example, prefilter_type_idc represents the noise removal filter when the value is "0", represents the sharpening filter when the value is "1", represents the bit depth conversion filter when the value is "2", represents the color space conversion filter when the value is "3", represents the resolution conversion filter when the value is "4", and represents other filters when the value is "5".

filter_strength_level_idc designates, for example, the filter strength by using three-bit flag information. filter_strength_level_idc represents the weakest filter strength when the value is "0", and represents stronger filter strength as the value increases. The maximum value of the filter strength is "7" or an arbitrary integer.

input_bit_depth_minus8 designates, for example, the bit depth of the input image before applying filter processing using three-bit flag information. The bit depth of the input image is either "8", "10", "12", or an arbitrary integer.

input_color_format_idc designates, for example, the color space of the input image before applying filter processing using three-bit flag information. The color space that can be designated is monochrome, YUV444, YUV422, YUV420, YUV400, or an arbitrary color space.

scale_factor designates the ratio between the resolution of the input image and the resolution of the first image. For example, when the resolution of the input image is 1920 x 1080 and the resolution of the first image is 960 x 540, the resolution in both vertical and horizontal directions becomes 1/2. Therefore, scale_factor_nominator is "1" and scale_factor_denominator is "2". scale_factor_nominator and scale_factor_denominator are each, for example, three-bit flag information, and can designate an arbitrary integer.

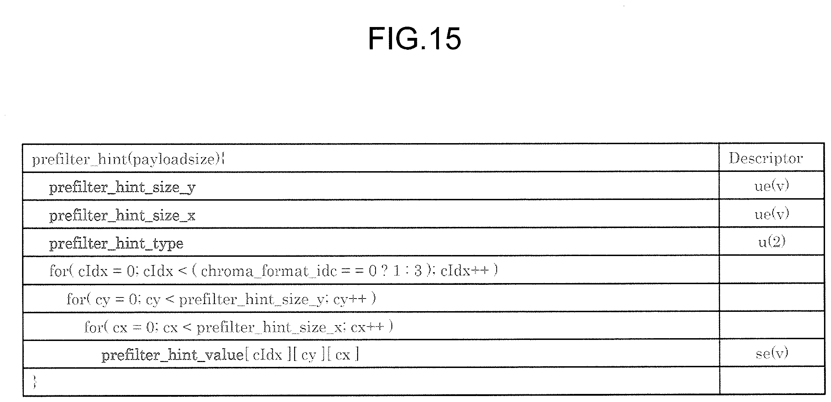

FIG. 15 is a diagram showing a second example of SEI message syntax about the filter information D6.

prefilter_hint_size_y designates the vertical size of the filter coefficient or correlation array, and is an arbitrary integer from "1" to "15", for example.

prefilter_hint_size_x designates the horizontal size of the filter coefficient or correlation array, and is an arbitrary integer from "1" to "15", for example.

prefilter_hint_type designates, for example, the type of filter by using two-bit flag information. For example, prefilter_hint_type represents a two-dimensional FIR filter when the value is "0", represents two one-dimensional FIR filters when the value is "1", and represents a cross-correlation matrix when the value is "2".

prefilter_hint_value designates the filter coefficient or elements of the cross-correlation matrix.

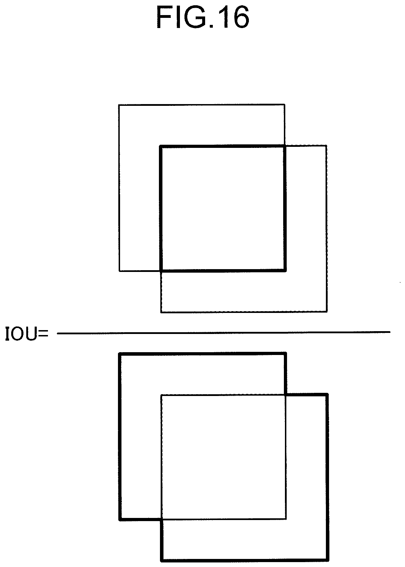

FIG. 16 is a diagram for describing an example where the setting unit 22 sets a threshold for IOU as a parameter value used when executing the machine task. IOU is a value used to represent the degree of overlap between the predicted bounding box and the true bounding box in object detection. In FIG. 16, the predicted bounding box is shown with a broken line, and the true bounding box is shown with a dot-dash line. IOU is calculated as the ratio of the area of the region containing both bounding boxes (numerator) to the area of the region containing at least one bounding box (denominator). When the threshold for IOU is set close to "1", the detection result becomes "true" only when the two bounding boxes almost overlap. When the threshold for IOU is set close to "0", the detection result becomes "true" even when the two bounding boxes overlap slightly. The setting unit 22 extracts the filter information D6 from the bit stream D4, sets the threshold for IOU based on the filter information D6, and inputs the setting information D7 to the task processing unit 23. The task processing unit 23 executes the machine task by using the threshold for IOU indicated in the setting information D7.

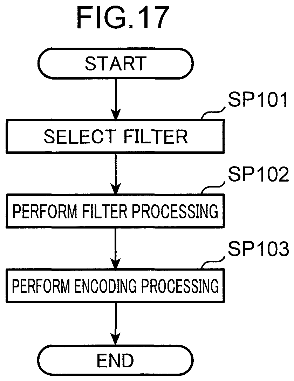

FIG. 17 is a flowchart showing the process flow executed by the image encoding device 10.

First, in step SP101, the filter processing unit 11 selects one filter from the plurality of filters based on the usage information D2.

Next, in step SP102, the filter processing unit 11 applies the filter selected in step SP101 to the input image and performs filter processing to generate the first image.

Next, in step SP103, the encoding processing unit 12 performs encoding processing on the first image to generate the bit stream. At that time, the encoding processing unit 12 encodes the filter information D6 indicating the filter applied by the filter processing unit 11 to the input image and stores the encoded data 70 of the filter information D6 in the bit stream D4. The encoding processing unit 12 transmits the generated bit stream D4 to the image decoding device 20 via the network Nw.

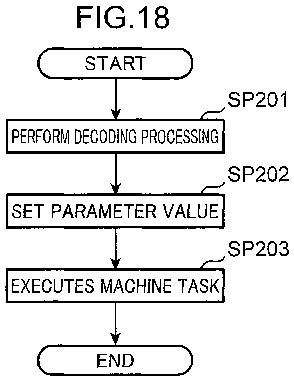

FIG. 18 is a flowchart showing the process flow executed by the image decoding device 20.

First, in step SP201, the decoding processing unit 21 receives the bit stream D4 from the image encoding device 10 via the network Nw and generates the decoded image by decoding the bit stream D4.

Next, in step SP202, the setting unit 22 extracts the filter information D6 from the decoded bit stream D4, and sets the parameter value used when the task processing unit 23 executes the machine task based on the filter information D6.

Next, in step SP203, the task processing unit 23 executes the machine task by using the decoded image decoded in step SP201 and the parameter value set in step SP202, and outputs the result data D9 such as inference results.

According to the present embodiment, the filter processing unit 11 includes a plurality of filters of different types, and selects one filter from the plurality of filters and applies the selected filter to the input image based on the usage information indicating the image usage on the image decoding device 20 side. As a result, it is possible to improve the bit efficiency in the transmission of the bit stream D4 from the image encoding device 10 to the image decoding device 20.

Additionally, according to the present embodiment, the filter processing unit 11 can apply an appropriate filter to the input image based on the image usage on the image decoding device 20 side.

Additionally, according to the present embodiment, as a noise removal filter, by applying at least one of the low-pass filter, Gaussian filter, smoothing filter, averaging filter, bilateral filter, and median filter to the input image, it is possible to remove noise from the input image.

Additionally, according to the present embodiment, it is possible to reduce the code amount by applying the downsampling filter to the input image.

Additionally, according to the present embodiment, it is possible to make a selection to apply a filter that reduces the code amount when the image usage is the machine task, and to apply a filter that does not reduce the code amount as much as when the image usage is the machine task, when the image usage is the human vision.

Additionally, according to the present embodiment, it is possible to improve the bit efficiency in the transmission of the bit stream D4 from the image encoding device 10 to the image decoding device 20 by applying the filter that reduces the code amount when the image usage is the machine task.

Additionally, according to the present embodiment, by reducing the code amount of the first image through deletion of information on details of the non-important region, there is no need to reduce the code amount of the important region, which is important for the machine task, making it possible to execute the machine task appropriately on the image decoding device 20 side.

Additionally, according to the present embodiment, the filter processing unit 11 emphasizes the important region by the filter processing, making it possible to execute the machine task appropriately on the image decoding device 20 side.

Additionally, according to the present embodiment, when the image usage is the human vision, it is possible to execute the human vision appropriately on the image decoding device 20 side by applying a filter that does not reduce the code amount as much as when the image usage is the machine task.

Additionally, according to the present embodiment, it is possible to utilize the filter information D6 in the machine task on the image decoding device 20 side by storing the filter information D6 about the filter applied to the input image in the bit stream D4.

Additionally, according to the present embodiment, by storing the filter information D6 in the header H of the bit stream D4, the image decoding device 20 can easily extract the filter information D6 from the bit stream D4.

Additionally, according to the present embodiment, by storing the filter information D6 in the SEI region, it is possible to easily handle the filter information D6 as additional information.

Additionally, according to the present embodiment, the setting unit 22 extracts the filter information D6 from the bit stream D4, and sets the parameter value used when the task processing unit 23 executes the machine task based on the filter information D6. As a result, the task processing unit 23 can execute appropriate task processing according to the filter applied by the image encoding device 10 to the input image.

### Industrial Applicability

The present disclosure is particularly useful for application to the image processing system including the image encoding device that transmits images and the image decoding device that receives images.

## Claims

1. An image encoding device comprising:
a filter processing unit that performs filter processing on an input image to generate a first image; and
an encoding processing unit that generates a bit stream by performing encoding processing on the first image and transmits the bit stream to an image decoding device,
wherein the filter processing unit:
includes a plurality of filters of different types, and
selects one filter from the plurality of filters based on usage information indicating image usage on the image decoding device side and applies the selected filter to the input image.

2. The image encoding device according to claim 1, wherein the plurality of filters includes at least one of a noise removal filter, a sharpening filter, a bit depth conversion filter, a color space conversion filter, a resolution conversion filter, and a filter using a neural network.

3. The image encoding device according to claim 2, wherein the noise removal filter includes at least one of a low-pass filter, a Gaussian filter, a smoothing filter, an averaging filter, a bilateral filter, and a median filter.

4. The image encoding device according to claim 2, wherein the resolution conversion filter includes a downsampling filter that reduces resolution of the first image from resolution of the input image.

5. The image encoding device according to claim 1, wherein the image usage includes at least one machine task and human vision.

6. The image encoding device according to claim 5, wherein when the image usage is the machine task, the filter processing unit reduces a code amount of the first image from a code amount of the input image by the filter processing.

7. The image encoding device according to claim 6, wherein the filter processing unit:
defines a non-important region that is not important for the machine task in the input image; and
reduces the code amount of the first image from the code amount of the input image by deleting information on details of the non-important region.

8. The image encoding device according to claim 6, wherein
the filter processing unit:
defines an important region that is important for the machine task in the input image; and
emphasizes the important region by the filter processing.

9. The image encoding device according to claim 5, wherein when the image usage is the human vision, the filter processing unit does not reduce a code amount of the first image by the filter processing more than when the image usage is the machine task.

10. The image encoding device according to claim 1, wherein the encoding processing unit stores filter information about the filter applied by the filter processing unit to the input image in the bit stream.

11. The image encoding device according to claim 10, wherein the encoding processing unit stores the filter information in a header of the bit stream.

12. The image encoding device according to claim 11, wherein
the header includes a supplemental enhancement information (SEI) region, and
the encoding processing unit stores the filter information in the SEI region.

13. An image decoding device comprising:
a decoding processing unit that receives a bit stream including an encoded image from an image encoding device and generates a decoded image by decoding the bit stream;
a task processing unit that executes a machine task based on the decoded image; and
a setting unit that extracts filter information from the bit stream and sets a parameter value used when the task processing unit executes the machine task based on the filter information,
wherein the bit stream further includes the filter information about a filter applied to an input image by the image encoding device according to the machine task.

14. An image encoding method comprising, by an image encoding device:
performing filter processing on an input image to generate a first image;
generating a bit stream by performing encoding processing on the first image and transmitting the bit stream to an image decoding device; and
selecting one filter from a plurality of filters of different types based on usage information indicating image usage on the image decoding device side and applying the selected filter to the input image in the filter processing.

15. An image decoding method comprising, by an image decoding device:
receiving a bit stream including an encoded image from an image encoding device and generating a decoded image by decoding the bit stream;
executing a machine task based on the decoded image; and
extracting filter information from the bit stream and setting a parameter value used when executing the machine task based on the filter information,
wherein the bit stream further includes the filter information about a filter applied to an input image by the image encoding device according to the machine task.
